# DEMANDE DE BREVET EUROPEEN

(11) **EP 4 350 404 A1**
(43) Date de publication de la demande: **10.04.2024**
(21) Numéro de dépôt: 23198466.7
(22) Date de dépôt: 20.09.2023
(51) Int. Cl.: G02B 6/38, H01R 13/629

(54) **CONTACT ELECTRIQUE ET/OU OPTIQUE COMPRENANT UN CORPS ET UN MANCHON DE CABLE CONFIGURE POUR EVITER UN DEVERROUILLAGE INTEMPESTIF DE CONNEXION, CONNECTEUR OU ADAPTATEUR LOGEANT UN TEL CONTACT**

(30) Priorité: 05.10.2022 FR 2210210
(71) Demandeur: Radiall, 93300 Aubervilliers (FR)
(72) Inventeur: VINCENT, Romain, 37110 Neuville sur Brenne (FR)
(74) Mandataire: Cabinet Nony

(57) **Abrégé**

L'invention concerne un contact électrique et/ou optique (1, 4), qui intègre un moyen de retenue temporaire du manchon de câble sur lequel un effort de poussée/traction est effectué pour réaliser le verrouillage/déverrouillage volontaire du ou des contacts du connecteur dans sa (leur) cavité réceptrice, ce moyen de retenue étant dimensionné pour générer un effort équilibrant l'effort de traction exercé sur le manchon tant que celui-ci reste inférieur à un seuil prédéterminé.

## Description

### Domaine technique

La présente invention concerne le domaine des contacts électriques et/ou optiques.

Elle concerne plus particulièrement les solutions de verrouillage/déverrouillage d'un contact dans une cavité réceptrice d'insert de connecteur, de connecteur ou d'adaptateur.

L'invention vise en premier lieu à fiabiliser le verrouillage entre un contact électrique / optique et sa cavité réceptrice d'un insert de connecteur ou d'un connecteur ou d'un adaptateur installé sur un équipement, en réduisant le risque de déverrouillage et donc de déconnexion intempestive.

Bien que décrite en référence à un contact optique, l'invention peut être mise en oeuvre avec un contact électrique et de manière générale à tous types de contacts optiques ou électriques.

Bien que décrite en référence à une application du domaine aéronautique, l'invention peut être appliquée dans d'autres domaines comme le ferroviaire, le domaine industriel, le médical, ou même les télécommunications, notamment dans des environnements sévères. En particulier, l'invention est applicable aux connecteurs du domaine aéronautique répondant aux normes ARINC 600, ARINC 404, MIL 38999, EN2997, EN4644, EN4165, et également aux adaptateurs optiques directs ou bien encore aux connecteurs du domaine ferroviaire répondant à la norme EN50467.

L'invention peut être mise en oeuvre dans tout type de connectique dans laquelle est inséré au moins un contact optique ou électrique, par exemple des connecteurs multi-contacts ou à des connecteurs formant des adaptateurs/raccords dédiés à un équipement, harnais ou autre...

### Technique antérieure

Dans le domaine de la connectique de transmission de signaux électriques et/ou de données et/ou de signaux radiofréquences (RF), il est connu que les connexions électriques, à fibres optiques et autres sont effectuées à l'aide de deux connecteurs s'emboîtant mutuellement, généralement sous la forme de connecteurs mâle et femelle accouplés entre eux. Il peut s'agir également d'un connecteur sous la forme d'un adaptateur ou d'un raccord.

Chaque connecteur mâle ou femelle comporte des contacts électriques, des contacts optiques ou d'autres contacts mutuellement situés et configurés de manière à fournir une connexion entre eux lorsque les connecteurs mâle et femelle sont accouplés entre eux.

Une spécification générale dans le domaine des connecteurs est de s'assurer que, lorsqu'un connecteur est équipé de son ou ses contacts, ou lorsque deux connecteurs complémentaires sont accouplés et verrouillés, leurs contacts ne peuvent pas être déverrouillés par inadvertance au montage ou en utilisation, afin de garantir la connexion électrique et/ou optique.

Un tel désaccouplement/déconnexion par inadvertance au montage ou en utilisation peut engendrer des dysfonctionnements par rupture du(des) signal(ux) à transmettre entre les connecteurs.

La déconnexion intempestive peut être la conséquence de l'une et/ou l'autre des causes suivantes :
- traction par erreur de l'opérateur sur le câble relié à un ou plusieurs contacts d'un connecteur en configuration connectée et verrouillée ;
- traction par erreur de l'opérateur sur le mécanisme de déverrouillage d'un ou plusieurs contacts d'un connecteur en configuration connectée et verrouillée ;
- conditions de fonctionnement sévères, telles des chocs et/ou des vibrations et/ou des accélérations ;
- un différentiel de pression important entre un environnement intérieur délimité par le connecteur lui-même et l'extérieur, que l'on peut traduire comme étant un effet « bouchon de champagne ». Un tel différentiel peut par exemple se retrouver en cas de dépression liée à l'altitude.

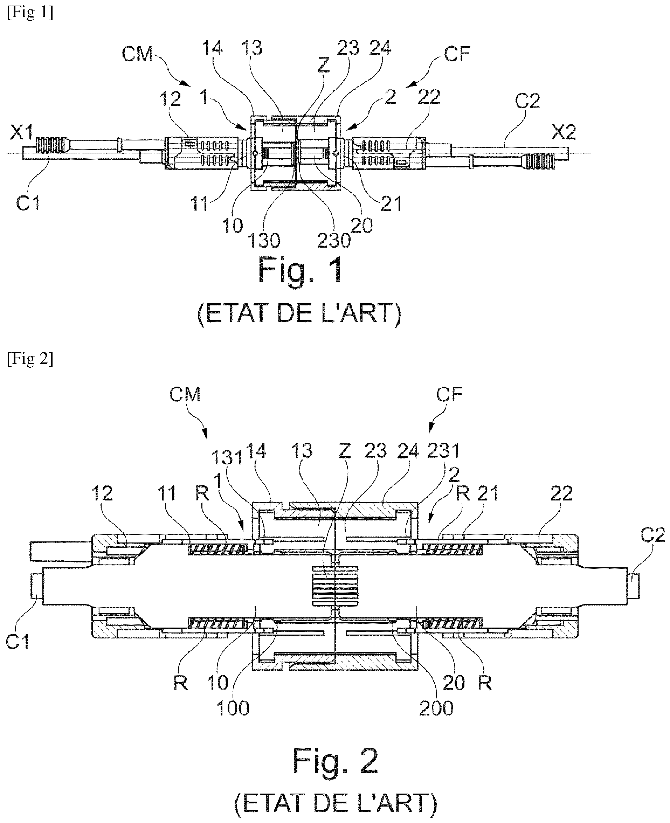

On a illustré en figures 1 et 2, un ensemble de connexion et de verrouillage entre un connecteur mâle CM et un connecteur femelle CF complémentaire à contacts optiques 1 et 2, dans leur configuration connectée qui définit une zone d'accouplement optique Z.

Chacun de ces deux contacts 1, 2 s'étend selon un axe longitudinal X1, X2 confondu dans leur configuration connectée.

Chacun de ces deux contacts 1, 2 comprend tout d'abord à l'avant un corps central 10, 20 pour loger et maintenir au moins une férule optique destinée à être reliée à une extrémité d'un câble C1, C2.

Un corps de verrouillage/déverrouillage périphérique 11, 21, usuellement appelé dévêtisseur est monté coulissant autour du corps central 10, 20. Le montage d'un dévêtisseur 11 ou 21 sur le corps central 10 ou 20 peut être réalisé par un emmanchement à force ou une fixation par clipsage/encliquetage.

Chaque dévêtisseur 11, 21 est monté coulissant à l'intérieur d'un manchon 12, 22 adapté pour loger le câble C1, C2 et pour se déplacer vers l'arrière ou l'avant par rapport au corps central 10, 20. Cet assemblage peut être réalisé par encliquetage de formes complémentaires d'une partie de ces pièces.

En outre, chacun des connecteurs CM, CF comprend au moins une cavité 130, 230 ou un insert 13, 23 avec au moins une cavité 130, 230 dans laquelle est inséré et maintenu de préférence par clipsage le corps central 10, 20. Chacun des inserts 13, 23 est monté dans un boitier 14, 24. En alternative, un insert 13, 23 peut aussi faire partie intégrante d'un boîtier 14, 24. Comme illustré, chaque corps central 10, 20 peut comporter sur au moins l'un de ses bords latéraux, un ou plusieurs ergots de clipsage 100, 200 pour réaliser le clipsage du corps 10, 20 dans la cavité correspondante 130, 230. Ce clipsage définit la bonne installation mécanique du contact 1, 2 dans les connecteurs CM, CF, permettant, une fois les connecteurs accouplés, une connexion optique et la bonne transmission des signaux optiques.

Au moins un moyen élastique de rappel, par exemple un ressort de rappel R est monté entre le corps central 10, 20 et le dévêtisseur 11, 21 monté autour. Ce ressort de rappel permet de ramener le dévêtisseur 11, 21 d'une position de déverrouillage dans laquelle l'(les) ergot(s) de clipsage 100, 200 peu(ven)t être déclipsé(s) de la(leur) cavité 130, 230 à une position de verrouillage dans laquelle le dévêtisseur 11, 21 empêche le déclipsage de l'(des) ergot(s) de clipsage 100, 200 de la(leur) cavité 130, 230.

La connexion et le verrouillage d'un contact 1, 2 dans un insert 13, 23 se font de la manière suivante.

Le contact optique et/ou électrique 1, 2 est inséré dans la cavité 130, 230 dédiée : pour cela, le manchon 12, 22 pousse sur le corps central arrière 18, puis sous l'action d'un clip 131, 231 au sein de l'insert 13, 23, le dévêtisseur 11, 21 recule alors relativement au corps central 10, 20, ce qui libère l'accès aux ergots de clipsage 100, 200 permettant de fait le clipsage du clip 131, 231 sur le corps 10, 20 dans la cavité 130, 230 dédiée. Puis, sous l'effet du ressort de rappel, le dévêtisseur 11, 21 se déplace vers l'avant en recouvrant les formes complémentaires 131, 231 de clipsage aux ergots 100, 200 de la cavité 130, 230, ce qui empêche le déverrouillage du contact.

Le déverrouillage volontaire et la déconnexion s'effectuent de la manière suivante.

En exerçant un effort de traction vers l'arrière sur le manchon 12, 22, on fait reculer le dévêtisseur 11, 21 qui est solidaire du manchon, ce qui rend apparents les reliefs complémentaires 131, 231 de la cavité 130, 230, permettant alors de déclipser le contact de cette dernière.

Cette configuration est globalement satisfaisante. Cependant, il existe des risques de déverrouillage intempestif et donc d'une déconnexion intempestive.

En effet, le manchon 12, 22 peut être tiré vers l'arrière par mégarde par un opérateur ou un accrochage non souhaité lors de manipulation du câble ou autre.., ce qui déplace le dévêtisseur 11, 21 vers l'arrière et donc provoque le déverrouillage par déclipsage des ergots 100, 200 et donc au final la déconnexion du contact optique et/ou électrique avec la perte de signal afférent.

Il existe donc un besoin pour éviter le déverrouillage intempestif d'un contact optique, électrique ou de données dans une cavité d'un connecteur utilisant un manchon pour le verrouillage/déverrouillage volontaires.

L'invention vise à répondre à tout ou partie de ce besoin.

### Exposé de l'invention

Pour ce faire, l'invention a pour objet, selon l'un de ses aspects, un contact électrique et/ou optique comprenant:
- au moins un corps central s'étendant le long d'un axe longitudinal (X), comprenant :
   une partie avant adaptée pour loger et maintenir au moins un élément conducteur électrique et/ou une férule optique destiné(e) à être relié(e) à une extrémité d'un câble ; la partie avant comprenant au moins un moyen de verrouillage/déverrouillage de la connexion entre le contact et la cavité dans laquelle il est destiné à être inséré;
   une partie arrière adaptée pour loger l'extrémité du câble;
- un manchon adapté pour loger le câble et pour se déplacer vers l'arrière / l'avant par rapport au corps central, le manchon comprenant au moins un moyen de retenue temporaire du manchon sur le corps central ou sur un composant du connecteur fixe par rapport au corps, le moyen de retenue temporaire étant actif en cas d'effort de traction (F1) exercé sur le manchon inférieur ou égal à un seuil prédéterminé (F2), en empêchant l'activation du moyen de déverrouillage qui réalise la déconnexion du contact.

De préférence, l'effort de traction (F3) à exercer sur le manchon pour réaliser l'activation du moyen de déverrouillage est supérieur au seuil prédéterminé.

Selon un mode de réalisation avantageux, le moyen de retenue temporaire est agencé tel qu'une fois inactif, le manchon se déplace vers l'arrière selon une course non nulle pour réaliser l'activation du moyen de déverrouillage.

Selon une première configuration avantageuse, le contact comprend, en tant que moyens de verrouillage/déverrouillage:
- un corps périphérique, appelé dévêtisseur, monté coulissant autour du corps central,
- un ou plusieurs ergots de clipsage sur au moins l'un des bords latéraux du corps central pour réaliser le clipsage de ce dernier dans la cavité,
le moyen de retenue temporaire étant un bras flexible fixé ou réalisé intégralement avec le manchon, le bras flexible étant adapté pour venir et être retenu en butée contre un épaulement du corps central, en cas d'effort de traction (F1) exercé sur le manchon inférieur ou égal au seuil prédéterminé (F2), et être défléchi et se dégager de la butée au-delà de ce seuil prédéterminé, le manchon étant monté coulissant vers l'arrière par rapport au corps central et au dévêtisseur selon une course au-delà de la butée jusqu'à accrocher un ou plusieurs reliefs du dévêtisseur et le déplacer vers l'arrière en cas d'effort de traction (F3) dans une position de déverrouillage dans laquelle il dégage l'(les) ergot(s) et ainsi activer son(leur) déclipsage.

Selon une variante de réalisation avantageuse, le contact comprend deux corps centraux, dont l'un constituant la partie avant dans laquelle la férule optique est logée et l'autre constituant la partie arrière monté dans le manchon.

Selon une autre variante de réalisation avantageuse, le contact comprend au moins un ressort de rappel monté entre le corps central et le dévêtisseur et adapté pour ramener le dévêtisseur de sa position de déverrouillage à sa position de verrouillage dans laquelle il empêche le déclipsage de l'(des) ergot(s) de clipsage de la(leur) cavité.

Selon cette première configuration, le contact comprend une férule optique de type férule MT, comportant une pluralité de voies optiques adaptées pour loger individuellement une fibre optique, la férule optique étant logée dans le corps central. La férule optique peut permettre une connexion à partir d'un câble optique sous la forme d'un ruban à au moins 8 fibres optiques, pour fournir une connexion multifibres optiques, telle que celle que l'on rencontre usuellement dans les connecteurs de type MPO ou MTP.

Selon une configuration avantageuse, le contact comprend, en tant que moyen de verrouillage/déverrouillage, au moins un levier monté pivotant sur le corps central, le moyen de retenue temporaire étant un ergot fixé ou réalisé intégralement avec le manchon, l'ergot étant adapté pour venir et être retenu en butée contre un renfoncement du corps central, en cas d'effort de traction (F1) exercé sur le manchon inférieur ou égal au seuil prédéterminé (F2), et se décrocher de la butée au-delà de ce seuil prédéterminé, le manchon comprenant au moins une ouverture débouchante dans laquelle est logé le levier, le manchon étant monté coulissant vers l'arrière par rapport au corps central selon une course au-delà de la butée jusqu'à ce que le bord de l'ouverture fasse pivoter le levier en cas d'effort de traction (F3) dans une position de déverrouillage dans laquelle il déverrouille le contact.

Selon cette configuration, le contact de type LC comprend une férule optique, comportant un canal optique central adapté pour loger une unique fibre optique, la férule optique étant logée dans le corps central.

Le manchon est de préférence à base de matériau polymère.

Le contact selon l'invention peut comprendre avantageusement un joint d'étanchéité agencé à la périphérie du manchon pour réaliser l'étanchéité de la(des) cavité(s) dans laquelle le(s) contact(s) est(sont) destiné(s) à être inséré(s). Le joint d'étanchéité peut être monté autour de la périphérie du manchon ou bien surmoulé avec cette dernière.

L'invention concerne également un connecteur comprenant au moins une cavité dans laquelle(lesquelles) le(s) contact(s) tel(s) que décrit(s) précédemment est(sont) destiné(s) à être inséré(s).

L'invention concerne également un adaptateur comprenant un corps définissant la(les) cavité(s) dans laquelle(lesquelles) le(s) contact(s) tel(s) que décrit(s) précédemment est(sont) destiné(s) à être inséré(s).

L'invention concerne également l'utilisation d'un connecteur ou adaptateur tel que décrit précédemment pour réaliser une connexion électrique et/ou optique dans le domaine aéronautique, le seuil prédéterminé étant au moins égal à 8N.

Ainsi, l'invention consiste essentiellement en un contact qui intègre un moyen de retenue temporaire du manchon de câble sur lequel un effort de poussée/traction est effectué pour réaliser le verrouillage/déverrouillage volontaire du ou des contacts du connecteur dans sa (leur) cavité réceptrice, ce moyen de retenue étant dimensionné pour générer un effort équilibrant l'effort de traction exercé sur le manchon tant que celui-ci reste inférieur à un seuil prédéterminé.

On empêche ainsi un déverrouillage intempestif, c'est-à-dire non volontaire, en cas de traction insuffisante. Ce seuil prédéterminé peut être ajusté par conception en fonction notamment des critères d'applications requis.

Les avantages de l'invention sont nombreux parmi lesquels on peut citer :
- la suppression du risque de déverrouillage intempestif d'un contact de sa cavité réceptrice d'un connecteur électrique et/ou optique et par-là la perte de transmission du signal ;
- la simplicité de réalisation du moyen de retenue temporaire qui n'augmente pas l'encombrement du contact et/ou du connecteur et donc permet de conserver une forte densité d'intégration ;
- la possibilité d'ajuster aisément le seuil prédéterminé au-delà duquel la retenue temporaire n'est plus effective, et en particulier d'augmenter celui-ci pour des applications notamment aéronautiques pour lesquelles un connecteur étanche peut être soumis à des fortes dépressions.
- la possibilité d'ajuster aisément le seuil prédéterminé au-delà duquel la retenue temporaire n'est plus effective, le tout, sans avoir d'impact sur l'effort d'insertion.
- la compatibilité de connexion avec des contacts de l'art antérieur.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] la figure 1 représente en vue en coupe longitudinale partielle un ensemble de connexion optique, de type contact MPO (acronyme anglo-saxon pour « Multiple-Fibre Push-On/Pull-off »), selon l'état de l'art en configuration connectée et verrouillée.
[Fig 2] la figure 2 est une autre vue en coupe longitudinale partielle d'un ensemble de connexion selon la figure 1.
[Fig 3] la figure 3 est une vue en perspective d'un contact optique de type MPO, selon l'invention.
[Fig 4] la figure 4 est une vue en éclaté d'un contact selon la figure 3.
[Fig 5] la figure 5 est une vue en coupe longitudinale partielle d'un contact selon la figure 3 ou 4.
[Fig 6] la figure 6 est une vue en coupe longitudinale partielle d'un contact selon l'une des figures 3 à 5 dans sa configuration installée dans un insert de connecteur ou dans un adaptateur.
[Fig 7] la figure 7 est une vue en coupe longitudinale partielle d'un contact selon l'une des figures 3 à 5 illustrant les bras flexibles en tant que moyens de retenue temporaires conformes à l'invention, dans leur position de retenue et montrant l'insert et sa cavité dans laquelle les contacts optiques sont insérés.
[Fig 8] la figure 8 reprend une partie de la figure 7 illustrant un des bras flexibles dans sa position dégagée qui permet le déverrouillage volontaire.
[Fig 9] la figure 9 représente en vue en coupe longitudinale partielle un ensemble de connexion optique, de type contact MPO, selon l'invention en configuration connectée et verrouillée.
[Fig 10] la figure 10 est une vue en coupe longitudinale partielle d'un contact de type MPO selon l'invention en configuration connectée et verrouillée dans un adaptateur installé sur un équipement électronique.
[Fig 11] la figure 11 est une vue en perspective d'un contact optique de type LC ( acronyme anglo-saxon pour "Lucent Connecter") duplex, selon l'invention dans une configuration de verrouillage.
[Fig 12] la figure 12 est une autre vue en perspective du contact selon la figure 11 dans une configuration de déverrouillage, le moyen de retenue temporaire étant dans une position dégagée.
[Fig 13] la figure 13 reprend la figure 11 en vue de côté.

### Description détaillée

Dans l'ensemble de la présente demande, les termes «interne» et «externe » sont à comprendre par rapport à un contact électrique et/ou optique selon l'invention ou d'un accessoire de contact électrique et/ou optique selon l'invention.

Par souci de clarté, une même référence numérique est utilisée pour un même élément d'un ensemble de connexion électrique selon l'état de l'art et d'un ensemble de connexion électrique selon l'invention.

Les figures 1 et 2 ont déjà été décrites en détail en préambule. Elles ne seront donc pas commentées ci-après.

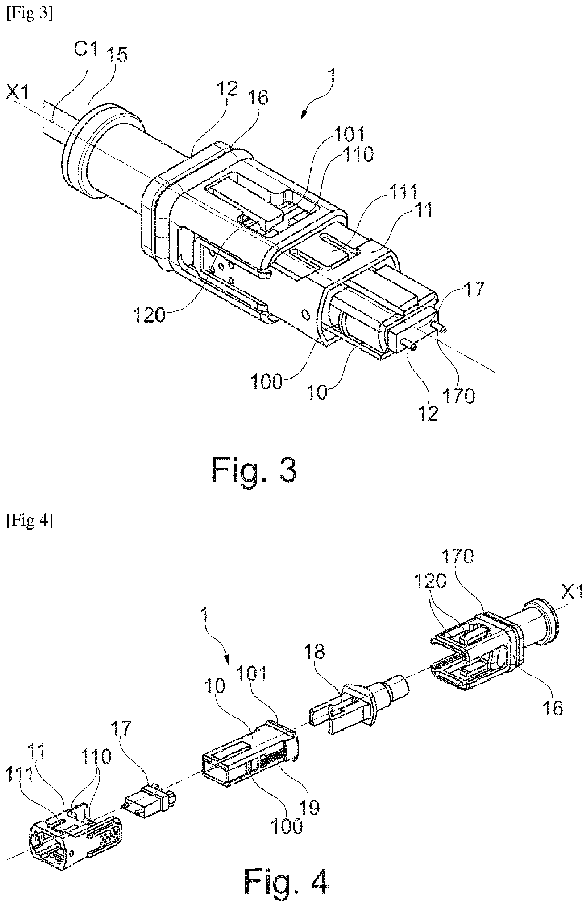

On a représenté sur les figures 3 à 5 un premier mode de réalisation de contact optique de type MPO étanche, selon l'invention.

Ce contact 1 s'étend selon un axe longitudinal X1 et comprend tout d'abord, à l'avant, un corps central avant 10.

Il comprend également un joint d'étanchéité 15 monté à l'arrière du manchon 12 et réalisant l'étanchéité entre un câble C1 et l'extrémité arrière du manchon 12 monté autour. Un joint d'étanchéité supplémentaire 16, par exemple torique, est monté en périphérie et l'arrière du manchon 12, réalisant l'étanchéité entre le contact 1 et la cavité 130. Ces joints 15 et 16 réalisent donc à l'intérieur de la cavité 130 dans laquelle est monté le corps central 10 une zone d'étanchéité.

Cette zone d'étanchéité est donc délimitée à l'intérieur de la cavité 130 autour du contact optiques et/ou électriques 1 dans sa configuration connectée au niveau de la zone d'accouplement Z.

Le contact 1 comprend en outre une férule optique 17 comprenant une ou plusieurs voies optiques, typiquement 8, 12 ou 24, logée et maintenue dans le corps central avant 10. Cette férule 17 est destinée à être reliée à une extrémité d'un câble optique C1.

Le contact 1 comprend, à l'arrière, un corps central arrière 18 emboîté dans le corps avant 10 et qui est destiné à être traversé par une partie du câble C1. Le corps central arrière 18 peut lui-même être composé d'une ou plusieurs pièces.

Le corps central avant 10 comprend un ou plusieurs ergots de clipsage 100 sur ses bords latéraux permettant au corps central 10 d'être clipsé dans sa cavité réceptrice et d'assurer la connexion des voies optiques au sein de la férule 17 dans la configuration connectée du connecteur 1.

Un dévêtisseur 11 est monté coulissant autour du corps central avant 10. Le montage du dévêtisseur 11 sur le corps central avant 10 peut être réalisé par exemple par un emmanchement à force ou une fixation par clipsage/encliquetage notamment par au moins une patte 111.

Le dévêtisseur 11 est en outre monté coulissant à l'intérieur d'un manchon 12 adapté pour loger le câble C1 et pour se déplacer vers l'avant/arrière par rapport au corps central avant 10. Cet assemblage peut être réalisé par encliquetage de formes complémentaires d'une partie de ces pièces. Par exemple, des excroissances de clipsage 110 peuvent être agencées à l'arrière du dévêtisseur 11 : elles viennent se clipser dans le manchon 12, comme détaillé par la suite.

Au moins un ressort de rappel 19, de préférence sous la forme d'un ressort hélicoïdal, est monté entre le corps central 10 et le dévêtisseur 11 monté autour. Ce ressort de rappel 19 permet de ramener le dévêtisseur 11 d'une position de déverrouillage dans laquelle l'(les) ergot(s) de clipsage 100 peu(ven)t être déclipsé(s) de la(leur) cavité réceptrice à une position de verrouillage dans laquelle le dévêtisseur 11, 21 empêche le déclipsage de l'(les) ergot(s) de clipsage 100 de la(leur) cavité 130, 230.

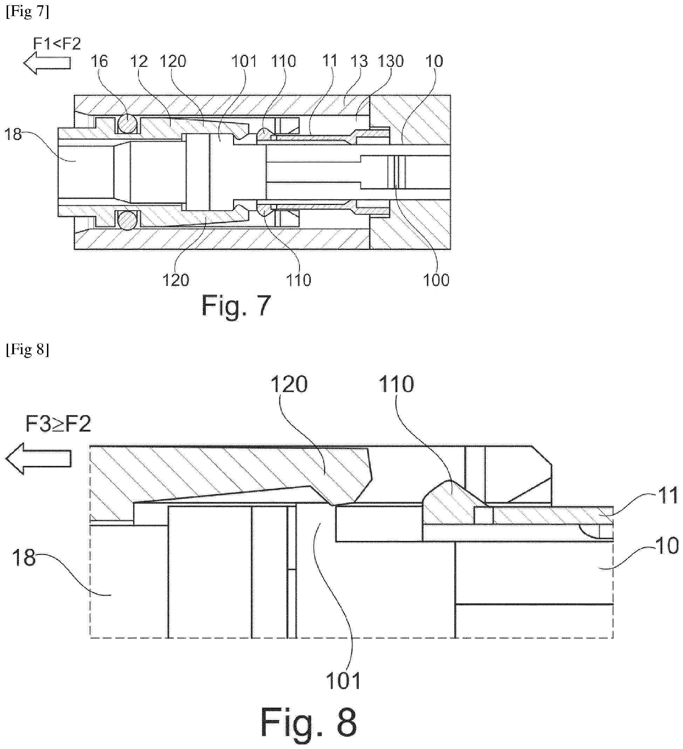

Selon l'invention, le manchon 12 comprend au moins un bras flexible 120 dont la fonction est, en cas de traction vers l'arrière, de retenir temporairement le manchon 12 dans une position intermédiaire, dite de retenue dans laquelle le déverrouillage du contact est empêché. Plus précisément, comme illustré à la figure 7, le bras flexible 120 comprend une excroissance qui vient se mettre en butée temporairement contre un épaulement 101 à l'arrière du corps central avant 10. La force de retenue temporaire est ajustable en dimensionnant le bras flexible 120 à souhait. Typiquement, cette force est supérieure ou égale à 8 N, pour un contact de type MPO.

Alternativement, le bras flexible 120 peut comporter une encoche, recevant une nervure en saillie du corps central avant 10, permettant de réaliser la fonction de retenue.

En exerçant une traction supplémentaire sur le manchon 12, avec une force au-delà de la force de retenue, on défléchit le bras 120 de sorte à qu'il ne soit plus en butée contre l'épaulement 101, comme illustré en figure 8. La face avant du manchon 12 peut alors exercer une force de recul sur le dévêtisseur 11 par l'intermédiaire des excroissances 110 et le dévêtisseur 11 peut ainsi reculer vers l'arrière, ce qui réalise le déverrouillage du corps central 10 et de la férule optique 17 et donc la déconnexion du contact optique 1, 2 de leur cavité réceptrice.

La connexion et le verrouillage d'un contact câblé à un câble optique C1 dans un insert se font de la manière suivante.

Le contact optique 1 comprenant la férule optique 17 définissant les voies optiques est inséré dans la cavité d'insert dédiée : le manchon 12 pousse sur le corps central arrière 18 et le corps central avant 10, le dévêtisseur 11 recule alors relativement au corps central avant 10, 20, ce qui libère l'accès aux ergots de clipsage 100 permettant de fait le clipsage du corps avant 10 aux reliefs complémentaires 131, 231 de l'insert correspondant (figure 2). Puis, sous l'effet du ressort de rappel 19, le dévêtisseur 11 se déplace vers l'avant en recouvrant les reliefs complémentaires 131, 231 dans l'insert, ce qui empêche le déverrouillage du contact.

Le déverrouillage et la déconnexion s'effectuent de la manière suivante.

En exerçant un effort de traction vers l'arrière sur le manchon 12, celui-ci se déplace relativement au corps central 10, 18 et au dévêtisseur 11 jusqu'à ce que le bras 120 du manchon vienne en butée contre l'épaulement 101 du corps central avant 10.

Tant que l'effort de traction F1 est inférieur à la valeur seuil F2, typiquement égale à 8N, le bras flexible 120 vient et reste en butée contre l'épaulement 101 du corps avant 10, ce qui empêche tout recul du dévêtisseur 11 et donc laisse les ergots 100 clipsés (figure 7). Ainsi tout déverrouillage intempestif est évité.

En cas de traction volontaire avec un effort de traction F3 supérieur à la valeur seuil F2, le bras 120 est défléchi, ce qui le libère de la butée 101 (figure 8) et donc permet un recul supplémentaire du dévêtisseur 11 jusqu'à rendre apparents les reliefs complémentaires 131, 231 dans l'insert, permettant alors de déclipser le contact de ce dernier. Le déverrouillage volontaire est effectué.

Grâce au bras flexible 120 selon l'invention, on empêche ainsi tout déverrouillage intempestif en cas de traction du manchon 12 vers l'arrière par mégarde par un opérateur ou un accrochage non souhaité lors de manipulation du câble ou autre...

En outre, dans la version étanche au moyen des joints 15 et 16, on empêche tout déverrouillage qui pourrait se produire suite à une dépression externe à la zone étanche délimitée par les joints 15 et 16. Ainsi, même en cas de différentiel de pression entre l'intérieur de cette zone et l'extérieur, par exemple en cas d'utilisation d'un ensemble de connexion CM, CF en altitude, dans une application aéronautique ou spatiale, qui exercerait sur le manchon 12 une force de traction en dessous de la valeur seuil F2, le bras flexible 120 vient et reste en butée contre l'épaulement 101 du corps avant 10. Autrement dit, l'invention empêche aussi tout déverrouillage intempestif qui pourrait être occasionné par une dépression externe.

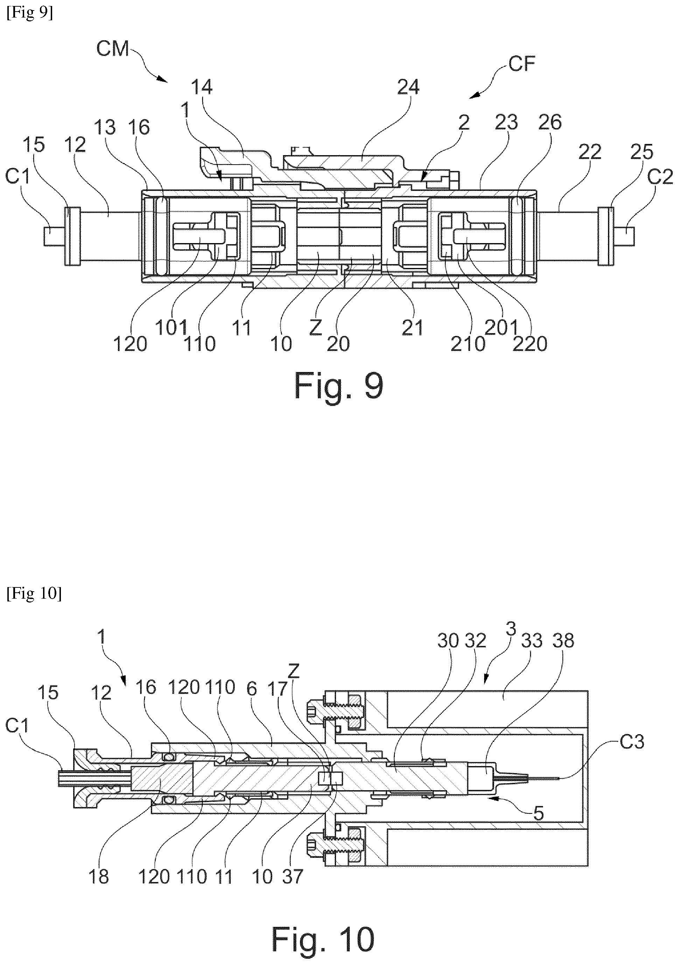

La figure 9 montre un ensemble de connexion avec deux connecteurs CM, CF à contacts complémentaires 1, 2 selon l'invention, en configuration connectée et verrouillée, chacun dans leur insert 13, 23 respectif lui-même monté dans un boitier 14, 24.

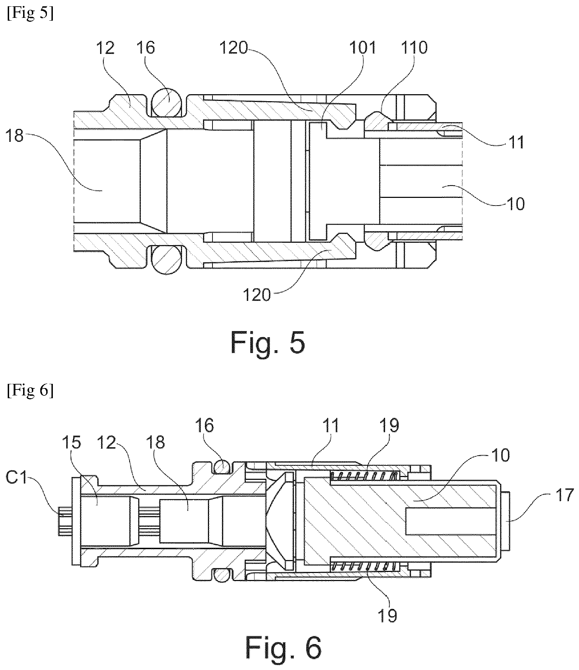

La figure 10 montre un autre exemple de connexion entre un contact 1 tel que celui décrit en référence aux figures 3 et 5 et un contact MPO 5 selon l'art antérieur câblé à un câble optique C3, accouplés au sein d'un adaptateur 6, installé sur un équipement électronique 3.

Ici, l'équipement électronique 3 comprend un contact MPO 5 selon l'art antérieur avec un corps central avant 30 dans lequel est logé une férule optique 37 qui est accouplée avec la férule optique 17 du contact 1 dans la zone d'accouplement optique Z.

Le contact MPO 5 comprend également un corps central arrière 38 à l'arrière du corps avant 30 et un dévêtisseur 32 situé autour du corps central avant 30.

L'adaptateur 6 est ici vissé de manière étanche au boitier 33 de l'équipement électronique 3.

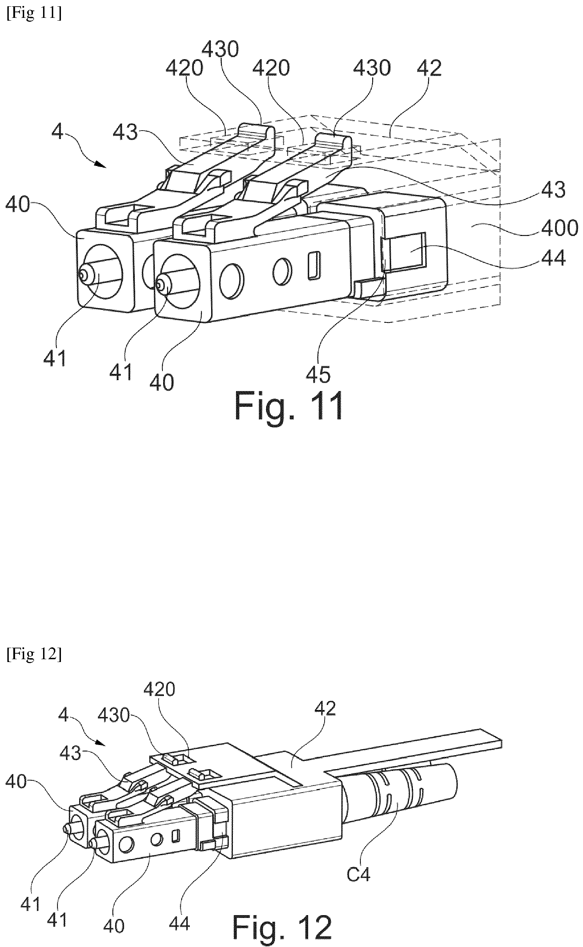

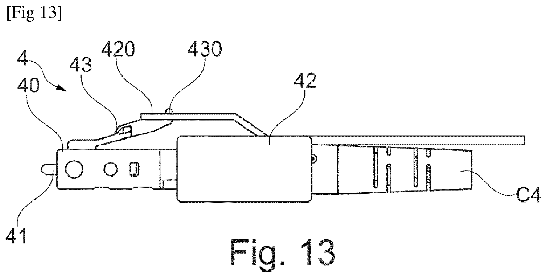

Les figures 11 à 13 sont relatives à un deuxième mode de réalisation de contact optique de type LC duplex, selon l'invention.

Le contact optique 4 comprend deux voies optiques, de type LC simplex, côte-à-côte câblées à un câble optique C4, chacune des deux voies optiques comprenant un corps 40 dans lequel est montée une férule optique de type céramique 41. La partie arrière 400 du corps 40, loge l'extrémité du câble optique C4.

Un manchon 42 entoure directement les deux corps 40 depuis l'arrière ainsi que l'extrémité du câble C4.

Le manchon 42 comprend deux ouvertures débouchantes 420 dans chacune desquelles est insérée l'extrémité libre 430 d'un levier de verrouillage/déverrouillage 43 monté pivotant sur l'un des corps 40. Dans l'exemple illustré, le levier 43 est réalisé intégralement avec le corps 40 et peut être défléchi.

Selon l'invention, au moins l'un des bords latéraux des deux corps 40 comprend un renfoncement 44 formant une butée de retenue d'un ergot 45 qui fait saillie de l'intérieur du manchon 42.

Ainsi, lorsque le connecteur 4 est en configuration connectée et verrouillée, en cas de traction vers l'arrière inférieure à une valeur seuil prédéterminée, l'ergot 45 est retenu clipsé par la butée formée par le renfoncement 44. Et dans ce cas l'extrémité libre 430 de chaque levier 43 reste non défléchie dans l'ouverture correspondante 420 du manchon 42.

En cas de traction au-delà de la valeur seuil prédéterminée, l'ergot 45 est décfipsé de la butée, le déplacement vers l'arrière du manchon 42 provoque ensuite la mise en butée du bord de chaque ouverture 420 sur l'extrémité libre 430 du levier 43 jusqu'à défléchir celle-ci et ainsi déverrouiller chaque contact.

Les positions de l'ergot 45 et du renfoncement 44 peuvent se trouver à n'importe quel autre endroit à la périphérie du contact. L'ergot 45 peut également être réalisé sur le corps du contact LC alors que le renfoncement 44 peut être réalisé sur le manchon 42. Alternativement, l'ergot 45 peut être remplacé par une patte de clipsage élastique. De manière plus générale, tout moyen d'interférence pouvant se déformer élastiquement peut convenir.

D'autres variantes et améliorations peuvent être prévues sans pour autant sortir du cadre de l'invention.

Le moyen de retenue temporaire illustré pour des contacts de type MPO est un bras flexible réalisé intégralement sur le manchon de câble, qui vient en butée contre un épaulement du corps central. On peut envisager d'autres formes de moyen et des points fixes de retenue agencés sur un composant de connecteur autre que le corps central, tel que l'insert ou le boitier. Il en va de même avec tous les connecteurs auxquels l'invention s'applique.

## Revendications

1. Contact électrique et/ou optique (1, 4), comprenant :
- au moins un corps central (10, 18, 40, 400) s'étendant le long d'un axe longitudinal (X), comprenant :
une partie avant (10, 40) adaptée pour loger et maintenir au moins un élément conducteur électrique et/ou une férule optique (17, 41) destiné(e) à être relié(e) à une extrémité d'un câble ; la partie avant comprenant au moins un moyen de verrouillage/déverrouillage de la connexion entre le contact (1) et la cavité (130) dans laquelle il est destiné à être inséré;
une partie arrière (18, 400) adaptée pour loger l'extrémité du câble;
- un manchon (12, 42) adapté pour loger le câble et pour se déplacer vers l'arrière / l'avant par rapport au corps central, le manchon comprenant au moins un moyen de retenue temporaire (120, 45) du manchon sur le corps central ou sur un composant du connecteur (13, 23, 14, 24) fixe par rapport au corps, le moyen de retenue temporaire étant actif en cas d'effort de traction (F1) exercé sur le manchon inférieur ou égal à un seuil prédéterminé (F2), en empêchant l'activation du moyen de déverrouillage qui réalise la déconnexion du contact.

2. Contact selon la revendication 1, l'effort de traction (F3) à exercer sur le manchon pour réaliser l'activation du moyen de déverrouillage étant supérieur au seuil prédéterminé.

3. Contact selon la revendication 1 ou 2, le moyen de retenue temporaire étant agencé tel qu'une fois inactif, le manchon se déplace vers l'arrière selon une course non nulle pour réaliser l'activation du moyen de déverrouillage.

4. Contact selon l'une des revendications précédentes, comprenant en tant que moyens de verrouillage/déverrouillage:
- un corps périphérique (11), appelé dévêtisseur, monté coulissant autour du corps central,
- un ou plusieurs ergots de clipsage (100) sur au moins l'un des bords latéraux du corps central (10) pour réaliser le clipsage de ce dernier dans la cavité (130),
- le moyen de retenue temporaire étant un bras flexible (120) fixé ou réalisé intégralement avec le manchon (12), le bras flexible étant adapté pour venir et être retenu en butée contre un épaulement (101) du corps central (10), en cas d'effort de traction (F1) exercé sur le manchon inférieur ou égal au seuil prédéterminé (F2), et être défléchi et se dégager de la butée au-delà de ce seuil prédéterminé, le manchon étant monté coulissant vers l'arrière par rapport au corps central et au dévêtisseur selon une course au-delà de la butée jusqu' à accrocher un ou plusieurs reliefs (110) du dévêtisseur et le déplacer vers l'arrière en cas d'effort de traction (F3) dans une position de déverrouillage dans laquelle il dégage l'(les) ergot(s) (100) et ainsi activer son(leur) déclipsage.

5. Contact selon la revendication 4, comprenant deux corps centraux (10, 18), dont l'un constituant la partie avant dans laquelle la férule optique est logée et l'autre constituant la partie arrière monté dans le manchon.

6. Contact selon la revendication 4 ou 5, comprenant au moins un ressort de rappel (19) monté entre le corps central (10) et le dévêtisseur (11) et adapté pour ramener le dévêtisseur (11) de sa position de déverrouillage à sa position de verrouillage dans laquelle il empêche le déclipsage de l'(des) ergot(s) de clipsage (100) de la(leur) cavité (130, 230).

7. Contact selon l'une des revendications 4 à 6, comprenant une férule optique de type férule MT, comportant une pluralité de voies optiques adaptées pour loger individuellement une fibre optique, la férule optique étant logée dans le corps central (10).

8. Contact selon l'une des revendications 1 à 3, comprenant en tant que moyen de verrouillage/déverrouillage, au moins un levier (43) monté pivotant sur le corps central (40), le moyen de retenue temporaire étant un ergot (45) fixée ou réalisée intégralement avec le manchon (42), l'ergot étant adaptée pour venir et être retenue en butée contre un renfoncement (44) du corps central (40), en cas d'effort de traction (F1) exercé sur le manchon inférieur ou égal au seuil prédéterminé (F2), et se décrocher de la butée au-delà de ce seuil prédéterminé, le manchon comprenant au moins une ouverture débouchante (420) dans laquelle est logé le levier, le manchon étant monté coulissant vers l'arrière par rapport au corps central selon une course au-delà de la butée jusqu'à ce que le bord de l'ouverture fasse pivoter le levier en cas d'effort de traction (F3) dans une position de déverrouillage dans laquelle il déverrouille le contact.

9. Contact, de type LC, selon la revendication 8, comprenant une férule optique (41), comportant un canal optique central adapté pour loger une unique fibre optique, la férule optique étant logée dans le corps central (40).

10. Contact selon l'une des revendications précédentes, le manchon étant à base de matériau polymère.

11. Contact selon l'une des revendications précédentes, comprenant un joint d'étanchéité (16) agencé à la périphérie du manchon pour réaliser l'étanchéité de la(des) cavité(s) dans laquelle le(s) contact(s) est(sont) destiné(s) à être inséré(s).

12. Connecteur (CM, CF) comprenant au moins une cavité (130, 230) dans laquelle(lesquelles) le(s) contact(s) selon l'une des revendications 1 à 11 est(sont) destiné(s) à être inséré(s),

13. Adaptateur (6) comprenant un corps définissant la(les) cavité(s) (130, 230) dans laquelle(lesquelles) le(s) contact(s) selon l'une des revendications 1 à 11 est(sont) destiné(s) à être inséré(s).

14. Utilisation d'un connecteur ou adaptateur selon l'une des revendications précédentes pour réaliser une connexion électrique et/ou optique dans le domaine aéronautique, le seuil prédéterminé étant au moins égal à 8N.
